# EUROPÄISCHE PATENTSCHRIFT

(11) **EP 1 228 329 B1**
(45) Veröffentlichungstag und Bekanntmachung des Hinweises auf die Patenterteilung: **10.05.2006**
(21) Anmeldenummer: 00966125.7
(22) Anmeldetag: 06.10.2000
(51) Int. Cl.: F16J 15/32

(54) **DICHTUNGSANORDNUNG MIT EINGEPASSTEM DICHTELEMENT**
SEALING DEVICE HAVING AN ADAPTED SEALING ELEMENT
DISPOSITIF D'ETANCHEIFICATION AVEC JOINT ADAPTE

(30) Priorität: 11.10.1999 DE 19949025
(43) Veröffentlichungstag der Anmeldung: 07.08.2002
(73) Patentinhaber: GKN Sinter Metals GmbH, 42477 Radevormwald (DE)
(72) Erfinder: ERNST, Eberhard, 36124 Eichenzell (DE); SCHWARZE, Rolf, 73433 Aalen-Wasseralfingen (DE); BACHMANN, Josef, 97791 Obersinn (DE)
(74) Vertreter: Maxton Langmaack & Partner
(86) Internationale Anmeldenummer: PCT/EP2000/009801
(87) Internationale Veröffentlichungsnummer: WO 2001/027503

(56) Entgegenhaltungen:
- DE-A- 2 628 313
- DE-A- 4 306 452
- US-A- 5 111 093

## Beschreibung

Die Erfindung betrifft ein Verfahren zur Herstellung einer Dichtungsanordnung bestehend aus einem auf einer Welle angeordneten gesinterten mitlaufenden Bauteil, das mit einem Dichtelement versehen ist, das in einer umlaufenden der Welle zugewandten Ausnehmung angeordnet ist, wobei das Dichtelement formschlüssig in die Ausnehmung eingepaßt ist und diese vollständig ausfüllt.

Aus dem Stand der Technik sind verschiedene mitlaufende Bauteile auf einer Welle bekannt, die wenigstens ein Dichtelement aufweisen, welche den Flüssigkeitsdurchtritt von einer Hochdruck- zu einer Niederdruckseite verhindert. Ein derartiges mitlaufendes Bauteil ist beispielsweise ein Innenrotor einer Ölpumpe, wobei die Ölpumpe beispielsweise auf einer Hauptwelle eines Getriebe sitzt. Der Innenrotor wird über einen Mitnehmer in der Innenkontur des Innenrotors von einer Welle angetrieben. Mittels eines komplizierten und kostenaufwendigen Konturdrehprozesses muß die Bohrung des Innenrotors so bearbeitet werden, daß eine an die beschriebene Innenkontur angepaßte Nut entsteht, die der Welle zugewandt ist. Nach dem Konturdrehen muß die Nut entgratet werden.

In einem sich anschließenden Montageprozeß wird in die Nut ein der Innenkontur in der Form angepaßter Dichtring, ein sogenannter O-Ring, eingesetzt. Dieser O-Ring muß sehr genau eingepaßt werden, bevor der Rotor auf die Welle aufgeschoben wird. Durch eine ungenaue Montage oder gegebenenfalls ungenügend genau tolerierten O-Ringe ist es nicht ausgeschlossen, daß der eingelegte O-Ring beim Aufschieben auf die welle verrutscht und gegebenenfalls beschädigt oder zerstört wird.

Im Falle eines Verrutschens, Beschädigens oder Zerstörens des O-Ringes muß der Innenrotor wieder von der Welle abgezogen und gereinigt werden, bevor in einem erneuten Montageprozeß ein neuer O-Ring in die Nut eingesetzt wird und der vormontierte Innenrotor auf die Welle aufgeschoben wird. Dieses ist zeit- und kostenaufwendig.

Aus der DE-A-26 28 313 ist ein Verfahren zur Herstellung einer in einer Umfangsnut eines Gehäuses o. dgl. anzuordnenden Abdichtung für eine Welle und nach dem Verfahren hergestellte Abdichtung bekannt, wobei nach der Montage der Welle in das Gehäuse in die Umfangsnut des Gehäuses mittels einer im Gehäuse angeordneten Stichbohrung Kunststoff eingebracht wird.

Aus der US-A-5 111 093 ist ein Starter für eine Brennkraftmaschine bekannt, wobei ein auf einer Welle rotierendes Bauteil eine Staubschutzdichtung bestehend aus einen elastischen Dichtring aufweist.

Die DE-A-43 06 452 zeigt ein integriertes Dichtungssystem zur Abdichtung der Enden einer Kurbelwelle mit einem radialen Dichtungselement zur Dichtung der Welle

Aus den Nachteilen des bekannten Standes der Technik ergibt sich die Aufgabe, eine Dichtungsanordnung zu schaffen, die so gestaltet ist, daß sie schneller und kostengünstiger gefertigt werden kann und unanfälliger gegen Einbaufehler bei der Montage ist.

Die Aufgabe wird erfindungsgemäß gelöst durch ein Verfahren zur Herstellung einer Dichtungsanordnung bestehend aus einem auf einer Welle angeordneten gesinterten mitlaufenden Bauteil, das mit einem Dichtelement versehen ist, das in einer umlaufenden der Welle zugewandten Ausnehmung angeordnet ist, wobei das Dichtelement formschlüssig in die Ausnehmung eingepaßt ist und diese vollständig ausfüllt, wobei das mitlaufende Bauteil aus Pulver gepreßt wird, und in den gebildeten Grünling durch eine spanende Bearbeitung im Grünzustand, vorzugsweise durch Drehen, eine ringförmige Ausnehmung eingearbeitet wird, daß Bauteil gesintert wird, und anschließend, vor der Montage des Bauteils auf der Welle, ein Dichtelement in die Ausnehmung einvulkanisiert wird.

Ein derartiger Herstellungsprozeß ermöglicht es, daß die Drehoperation kostengünstig im Grünzustand vorgenommen werden kann, welches einfacher ist als in gesintertem Zustand. Insbesondere sind aufgrund eines geringeren Werkzeugverschleißes höhere Standzeiten der Bearbeitungswerkzeuge möglich.

In vorteilhafter Ausgestaltung der Erfindung ist vorgesehen, daß die erfindungsgemäß Dichtungsanordnung dadurch hergestellt wird, daß in das mitlaufende Bauteil durch eine spanende Bearbeitung, vorzugsweise durch Drehen, eine ringförmige Ausnehmung eingearbeitet wird und anschließend ein Dichtelement in die Ausnehmung einvulkanisiert wird.

Gegenüber dem Stand der Technik ist es nicht notwendig, daß die ringförmige Ausnehmung mittels Konturdrehen hergestellt wird. Vielmehr kann ein kostengünstigeres normales Drehen eingesetzt werden, da die Ausnehmung für das Dichtelement beliebig geformt sein kann. Außerdem kann die Kontur des Dichtelementes beliebig von der Innenkontur des Rotors abweichen. Auch die Innenkontur des mitlaufenden Bauteils kann beliebig geformt sein. Ein einvulkanisiertes Dichtelement hat den Vorteil, daß es fest mit der Ausnehmung verbunden ist und sich nicht leicht aus dieser löst.

Die Aufgabe wird ferner gelöst durch ein Verfahren zur Herstellung einer Dichtungsanordnung bestehend aus einem auf einer Welle angeordneten gesinterten mitlaufenden Bauteil, das mit einem Dichtelement versehen ist, das in einer umlaufenden der Welle zugewandten Ausnehmung angeordnet ist, wobei das Dichtelement formschlüssig in die Ausnehmung eingepaßt ist und diese vollständig ausfüllt, wobei das mitlaufende Bauteil aus Pulver gepreßt wird, und in den gebildeten Grünling durch eine spanende Bearbeitung im Grünzustand, vorzugsweise durch Drehen, eine ringförmige Ausnehmung eingearbeitet wird, daß Bauteil gesintert wird, und anschließend, vor der Montage des Bauteils auf der Welle, ein Dichtelement in die Ausnehmung eingespritzt wird.

In weiterer vorteilhafter Ausgestaltung der Erfindung ist vorgesehen, daß in das mitlaufende Bauteil durch eine spanende Bearbeitung, vorzugsweise durch Drehen, eine ringförmige Ausnehmung eingearbeitet wird und anschließend das Dichtelement mittels Spritzgießen in die Ausnehmung eingebracht wird. Ein derartiges Verfahren ermöglicht es, daß das Dichtelement fest mit der Ausnehmung verbunden ist.

Der Vorteil einer derart gestalteten Dichtungsanordnung besteht darin, daß durch die formschlüssige Einpassung des Dichtelementes die Nut vollständig ausgefüllt ist und somit im Gegensatz zur Verwendung eines O-Ringes keine umlaufenden Hohlräume bestehen. Durch die bei einem O-Ring vorhandenen Hohlräume ist die Verformung des O-Ringes nicht so genau vorhersehbar, wie die Verformung eines Dichtelementes, das in einer Ausnehmung der Hohlräume eingepaßt ist. Ein erfindungsgemäß eingepaßtes Dichtelement weist im Vergleich zu einem O-Ring einen besseren Halt des Dichtelementes in der Nut auf.

In vorteilhafter Ausgestaltung der Erfindung ist vorgesehen, daß das Dichtelement unmittelbar mit dem mitlaufenden Bauteil verbunden ist. Eine derartige Gestaltung der Dichtungsanordnung ermöglicht es, daß sich das Dichtelement beim Aufschieben des mitlaufenden Bauteils auf die Welle nicht aus der Nut lösen kann und dadurch beschädigt oder zerstört wird. Dem Verschieben des Dichtelementes wird durch die feste Verbindung zwischen Dichtelement und mitlaufenden Bauteil entgegengewirkt.

In zweckmäßiger Ausgestaltung der Erfindung ist vorgesehen, daß die Ausnehmung eine zur Welle koaxiale Ringnut ist, die das Dichtelement aufnimmt.

In weiterer zweckmäßiger Ausgestaltung der Erfindung ist vorgesehen, daß die Ausnehmung zur welle und Stirnseite des mitlaufenden Bauteils geöffnet ist. Ein Dichtelement, das in einer derart gestalteten Ausnehmung angeordnet ist, ermöglicht im eingebauten Zustand sowohl eine axiale als auch radiale Abdichtung.

Ein einvulkanisiertes Dichtelement ist fest und unlösbar mit der Ausnehmung verbunden, so daß es nicht durch eine Fehlmontage beschädigt werden kann. Weiterhin wird hierdurch eine vormontierte Einheit aus dem mitlaufenden Bauteil und dem Dichtelement gebildet, die im Montageprozeß bereitgestellt werden kann, so daß auf ein weiteres Element, den O-Ring, verzichtet werden kann. Die Montage kann hierdurch vereinfacht und die Montagezeiten können verkürzt werden.

Eingespritzte Dichtelemente weisen wie einvulkanisierte Dichtelemente den Vorteil auf, daß sie fest mit der Ausnehmung verbunden sind. Eine noch verbesserte Haftung des Dichtelementes in der Ausnehmung kann dadurch erzielt werden, daß gegebenenfalls die Ausnehmung vor dem Vulkanisieren oder Spritzen mit einem Primer vorbehandelt wird.

In weiterer vorteilhafter Ausgestaltung der Erfindung ist vorgesehen, daß das Dichtelement einen annähernd rechteckigen Querschnitt aufweist. Die der Welle zugewandte Seite des Dichtelementes kann beliebig ausgebildet sein, beispielsweise flach, gewölbt oder mit einer Spitze versehen.

In besonders vorteilhafter Ausgestaltung der Erfindung ist vorgesehen, daß das Dichtelement mit wenigstens einer Dichtlippe versehen ist. Die Dichtlippe kann einerseits auf der der Welle zugewandten Seite des Dichtelementes angeordnet sein und/oder auf der Stirnseite des Dichtelementes. Die Dichtlippe kann beim Vulkanisieren oder Spritzen mit angeformt werden. Sie ermöglicht je nach Ausbildung eine bessere Abdichtung von der Hochdruck- zur Niederdruckseite. Die Geometrie des Dichtelements und/oder der Dichtlippe kann dem jeweiligen Anwendungsfall entsprechend optimal ausgebildet werden. Weiterhin kann das Dichtelement auch durch die Shore-Härte des Werkstoffs des Dichtelements optimal auf den Anwendungsfall abgestimmt werden. Eine weitere Möglichkeit das Dichtelement entsprechend den Anforderungen anzupassen besteht darin, daß die Tiefe der Nut in die durch das Dichtelement ausgefüllt ist dem Anwendungsfall entsprechend gefertigt werden kann, da beispielsweise eine tiefe Nut mit einem entsprechend tiefen Dichtelement stärker gestaucht zusammgedrückt werden kann - also weicher ist - als beispielsweise eine Nut mit geringer Tiefe in die entsprechend wenig Material des Dichtelementes eingebracht werden kann, so daß das Dichtelement eine höhere Härte aufweist und weniger gestaucht werden kann.

In vorteilhafter Ausgestaltung der Erfindung ist vorgesehen, daß das Dichtelement aus elastisch oder plastisch verformbarem Kunststoff besteht. Eine derartige Gestaltung des Dichtelementes ermöglicht es, daß eine verbesserte Dichtung zwischen dem mitlaufenden Bauteil und der Welle besteht. Das Dichtelement paßt sich optimal an gegebenenfalls bestehende Toleranzen zwischen der Welle und dem mitlaufenden Bauteil an.

In zweckmäßiger Ausgestaltung der Erfindung ist vorgesehen, daß das Dichtelement eine Abflachung aufweist, die der Innenkontur des mitlaufenden Bauteils angepaßt ist. Bei einem Innenrotor für eine Pumpe wird der Innenrotor beispielsweise über einen Mitnehmer in der Innenkontur von einer Welle angetrieben. Die Innenkontur des Rotors kann beliebig geformt sein, wobei beispielsweise Flächenmitnehmer, Verzahnungen oder Nuten vorgesehen sein können. Das zu verwendende Dichtelement kann jeweils optimal auf die Innenkontur des mitlaufenden Bauteils abgestimmt werden, da das Dichtelement einfach und kostengünstig beim Prozeß des Vulkanisierens oder Spritzens gefertigt werden kann.

In besonders vorteilhafter Ausgestaltung der Erfindung ist vorgesehen, daß das mitlaufende Bauteil, insbesondere ein Rotor bzw. ein Innenrotor, ein Sinterteil ist.

Die Erfindung wird anhand schematischer Zeichnungen näher erläutert. Es zeigen:
- Fig. 1: eine Aufsicht auf einen Innenrotor,
- Fig. 2: einen Schnitt durch den Innenrotor gemäß Fig. 1 entlang der Linie A-A
- Fig. 3: das erfindungsgemäße Dichtelement gemäß der Einzelheit "X" in Fig. 2,
- Fig. 4: einen Schnitt durch den Innenrotor mit einer stirnseitigen Anordnung des Dichtelements.

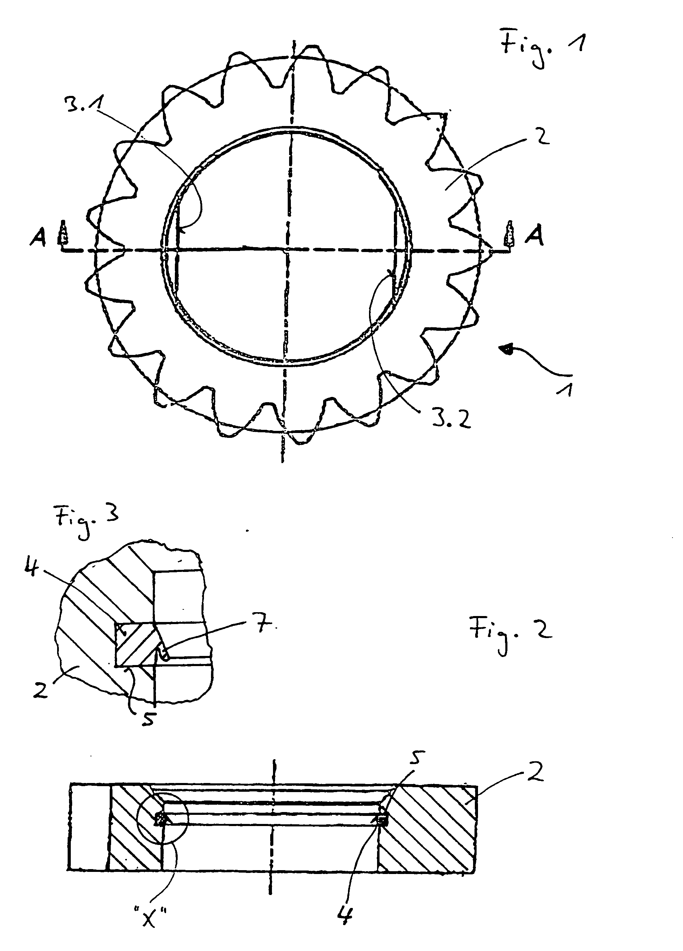

Fig 1 zeigt einen erfindungsgemäße Dichtungsanordnung 1, bestehend aus einem auf einer nicht näher dargestellten Welle angeordneten mitlaufenden Bauteil in Form eines Innenrotors 2, der mit einem Dichtelement versehen ist. Bei dem Innenrotor 2 für eine Ölpumpe wird der Innenrotor beispielsweise über Mitnehmer 3.1 und 3.2 in der Innenkontur von einer Welle angetrieben. Die Innenkontur des Rotors kann beliebig geformt sein, wobei beispielsweise Flächenmitnehmer, Verzahnungen oder Nuten vorgesehen sein können.

Fig 2 zeigt einen Schnitt durch den Innenrotor 2 gemäß Fig. 1 entlang der Linie A-A, wobei die erfindungsgemäße Dichtungsanordnung 1 aus einem auf einer nicht näher dargestellten Welle angeordneten Innenrotor 2 gebildet wird, der mit einem Dichtelement 4 versehen ist. Das Dichtelement 4 ist in einer umlaufenden der Welle zugewandten Ausnehmung in Form einer Nut 5 angeordnet ist, wobei das Dichtelement 4 formschlüssig in die Ausnehmung eingepaßt ist und diese vollständig ausfüllt. Die Ausnehmung zur Aufnahme des Dichtelements 4 ist als eine zur Welle koaxiale Ringnut 5 ausgebildet.

Fig. 3 zeigt das erfindungsgemäße Dichtelement 4 gemäß der Einzelheit "X" in Fig. 2, wobei erkennbar ist, daß das Dichtelement 4 formschlüssig in die Ausnehmung eingepaßt ist und diese vollständig ausfüllt. Ein erfindungsgemäß eingepaßtes Dichtelement 4 weist im Vergleich zu einem in eine Nut 5 eingelegten O-Ring nach dem Stand der Technik einen besseren Halt des Dichtelementes 4 in der Nut 5 auf.

Dadurch, daß das Dichtelement 4 unmittelbar mit dem Innenrotor 2 verbunden ist, wird gewährleistet, daß sich das Dichtelement 4 beim Aufschieben des Innenrotors 2 auf die Welle nicht aus der Nut 5 lösen kann und dadurch beschädigt oder zerstört wird. Dem Verschieben des Dichtelementes 4 wird durch die feste Verbindung zwischen Dichtelement 4 und Innenrotor 2 entgegengewirkt.

Die Nut 5 kann ein einvulkanisiertes Dichtelement 4 aufweisen. Ein einvulkanisiertes Dichtelement 4 ist fest und unlösbar mit der Nut 5 verbunden, so daß es nicht durch eine Fehlmontage beschädigt werden kann. Die Nut 5 kann alternativ ein eingespritztes Dichtelement 4 aufweisen. Eingespritzte Dichtelemente 4 weisen den gleichen Vorteil wie einvulkanisierte Dichtelemente 4 auf. Eine noch weiter verbesserte Haftung des Dichtelementes 4 in der Nut kann dadurch erzielt werden, daß gegebenenfalls die Nut vor dem Vulkanisieren oder Spritzen mit einem Primer vorbehandelt wird. Ferner kann die Nut 5 auch ein eingeklebtes Dichtelement 4 aufweisen.

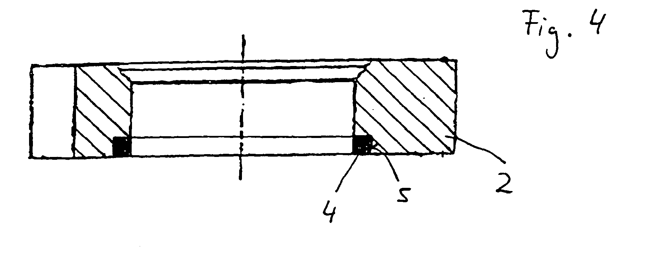

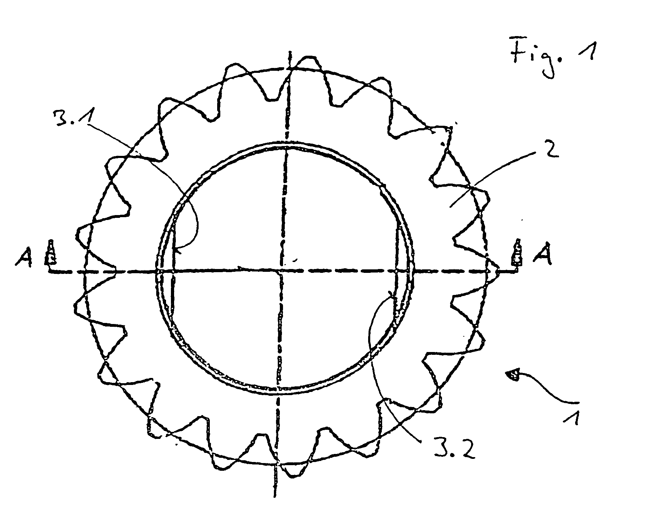

Das Dichtelement 4 kann mit wenigstens einer Dichtlippe 7 versehen werden, wobei die Dichtlippe 7 einerseits auf der der Welle zugewandten Seite des Dichtelementes 4 angeordnet sein kann und/oder auf der Stirnseite des Dichtelementes gemäß Fig. 4. Die Dichtlippe 7 kann beim Vulkanisieren oder Spritzen mit angeformt werden. Sie ermöglicht je nach Ausbildung eine bessere Abdichtung von der Hochdruck- zur Niederdruckseite.

Fig. 4 zeigt einen Schnitt durch den Innenrotor 2 mit einer stirnseitigen Anordnung des Dichtelements 4. Eine derartig gestaltete Ausnehmung 6, die zur Welle und Stirnseite des Innenrotors geöffnet ist, ermöglicht im eingebauten Zustand sowohl eine axiale als auch eine radiale Abdichtung.

## Patentansprüche

1. Verfahren zur Herstellung einer Dichtungsanordnung (1) bestehend aus einem auf einer Welle angeordneten gesinterten mitlaufenden Bauteil (2), das mit einem Dichtelement (4) versehen ist, das in einer umlaufenden der Welle zugewandten Ausnehmung (5) angeordnet ist, wobei das Dichtelement (4) formschlüssig in die Ausnehmung (5) eingepaßt ist und diese vollständig ausfüllt, **dadurch gekennzeichnet, daß** das mitlaufende Bauteil (2) aus Pulver gepreßt wird, und in den gebildeten Grünling durch eine spanende Bearbeitung im Grünzustand, vorzugsweise durch Drehen, eine ringförmige Ausnehmung (5) eingearbeitet wird, daß das Bauteil (2) gesintert wird, und anschließend, vor der Montage des Bauteils (2) auf der Welle, ein Dichtelement (4) in die Ausnehmung (5) einvulkanisiert oder eingespritzt wird.

2. Verfahren zur Herstellung einer Dichtungsanordnung (1) nach Anspruch 1, **dadurch gekennzeichnet, daß** das Dichtelement (4) unmittelbar mit dem mitlaufenden Bauteil (2) verbunden ist.

3. Verfahren zur Herstellung einer Dichtungsanordnung (1) nach Anspruch 1 oder 2, **dadurch gekennzeichnet, daß** die Ausnehmung (5) eine zur Welle koaxiale Ringnut (5) ist.

4. Verfahren zur Herstellung einer Dichtungsanordnung (1) nach einem der Ansprüche 1 bis 3, **dadurch gekennzeichnet, daß** die Ausnehmung (5) zur Welle und Stirnseite des mitlaufenden Bauteils (2) geöffnet ist.

5. Verfahren zur Herstellung einer Dichtungsanordnung (1) nach einem der Ansprüche 1 bis 4, **dadurch gekennzeichnet, daß** das Dichtelement (4) einen annähernd rechteckigen Querschnitt aufweist.

6. Verfahren zur Herstellung einer Dichtungsanordnung (1) nach einem der Ansprüche 1 bis 5, **dadurch gekennzeichnet, daß** das Dichtelement (4) mit wenigstens einer Dichtlippe (7) versehen ist.

7. Verfahren zur Herstellung einer Dichtungsanordnung (1) nach einem der Ansprüche 1 bis 6, **dadurch gekennzeichnet, daß** das Dichtelement (4) aus elastisch oder plastisch verformbaren Kunststoff besteht.

8. Verfahren zur Herstellung einer Dichtungsanordnung (1) nach einem der Ansprüche 1 bis 7, **dadurch gekennzeichnet, daß** das Dichtelement (4) eine der Innenkontur des mitlaufenden Bauteils (2) angepaßte Abflachung aufweist.

9. Verfahren zur Herstellung einer Dichtungsanordnung (1) nach einem der Ansprüche 1 bis 8, **dadurch gekennzeichnet, daß** das mitlaufende Bauteil (2) ein Rotor für eine Ölpumpe ist, insbesondere ein Innenrotor (2).

10. Verfahren zur Herstellung einer Dichtungsanordnung (1) nach einem der Ansprüche 1 bis 9, **dadurch gekennzeichnet, daß** der Innenrotor (2) an seiner Innenkontur wenigstens einen Mitnehmer (3.1, 3.2) zum Antrieb durch die Welle aufweist.

## Claims

1. A method for producing a sealing arrangement (1) consisting of a sintered entrained component (2) located on a shaft, which component is provided with a sealing element (4) which is arranged in a circumambient recess (5) facing the shaft, the sealing element (4) being fitted in positive manner into the recess (5) and filling it completely, **characterised in that** the entrained component (2) is pressed from powder and an annular recess (5) is machined by a stock removal operation into the resulting green compact in the green state, preferably by turning, that the component (2) is sintered and then, before the component (2) is mounted on the shaft, a sealing element (4) is vulcanised or injected into the recess (5).

2. A method for producing a sealing arrangement (1) according to Claim 1, **characterised in that** the sealing element (4) is joined directly to the entrained component (2).

3. A method for producing a sealing arrangement (1) according to Claim 1 or 2, **characterised in that** the recess (5) is an annular groove (5) coaxial to the shaft.

4. A method for producing a sealing arrangement (1) according to one of Claims 1 to 3, **characterised in that** the recess (5) is open towards the shaft and end face of the entrained component (2).

5. A method for producing a sealing arrangement (1) according to one of Claims 1 to 4, **characterised in that** the sealing element (4) has an approximately rectangular cross-section.

6. A method for producing a sealing arrangement (1) according to one of Claims 1 to 5, **characterised in that** the sealing element (4) is provided with at least one sealing lip (7).

7. A method for producing a sealing arrangement (1) according to one of Claims 1 to 6, **characterised in that** the sealing element (4) consists of elastically or plastically deformable plastics material.

8. A method for producing a sealing arrangement (1) according to one of Claims 1 to 7, **characterised in that** the sealing element (4) has a flattened area adapted to the internal contour of the entrained component (2).

9. A method for producing a sealing arrangement (1) according to one of Claims 1 to 8, **characterised in that** the entrained component (2) is a rotor for an oil pump, in particular an internal rotor (2).

10. A method for producing a sealing arrangement (1) according to one of Claims 1 to 9, **characterised in that** the internal rotor (2) has at least one entraining means (3.1, 3.2) for being driven by the shaft on its internal contour.

## Revendications

1. Procédé de fabrication d'un dispositif d'étanchéité (1) comprenant un composant (2) rotatif fritté disposé sur un arbre, qui est muni d'un élément d'étanchéité (4) disposé dans un évidement (5) périphérique situé en regard de l'arbre, l'élément d'étanchéité (4) étant ajusté par complémentarité de formes dans l'évidement (5) et le remplissant complètement, **caractérisé en ce que** le composant (2) rotatif est comprimé à partir d'une poudre, et un évidement annulaire (5) est aménagé dans le comprimé brut par usinage par enlèvement de copeaux à l'état brut, de préférence par tournage, le composant (2) est fritté puis, avant le montage du composant (2) sur l'arbre, un élément d'étanchéité (4) est vulcanisé ou injecté dans l'évidement (5).

2. Procédé de fabrication d'un dispositif d'étanchéité (1) selon la revendication 1, **caractérisé en ce que** l'élément d'étanchéité (4) est relié directement au composant (2) rotatif.

3. Procédé de fabrication d'un dispositif d'étanchéité (1) selon la revendication 1 ou 2, **caractérisé en ce que** l'évidement (5) est une rainure annulaire (5) coaxiale à l'arbre.

4. Procédé de fabrication d'un dispositif d'étanchéité (1) selon l'une quelconque des revendications 1 à 3, **caractérisé en ce que** l'évidement (5) est ouvert en direction de l'arbre et de la face frontale du composant (2) rotatif.

5. Procédé de fabrication d'un dispositif d'étanchéité (1) selon l'une quelconque des revendications 1 à 4, **caractérisé en ce que** l'élément d'étanchéité (4) présente une section transversale sensiblement rectangulaire.

6. Procédé de fabrication d'un dispositif d'étanchéité (1) selon l'une quelconque des revendications 1 à 5, **caractérisé en ce que** l'élément d'étanchéité (4) est muni d'au moins une lèvre d'étanchéité (7).

7. Procédé de fabrication d'un dispositif d'étanchéité (1) selon l'une quelconque des revendications 1 à 6, **caractérisé en ce que** l'élément d'étanchéité est réalisé à partir d'une matière plastique déformable élastiquement ou plastiquement.

8. Procédé de fabrication d'un dispositif d'étanchéité (1) selon l'une quelconque des revendications 1 à 7, **caractérisé en ce que** l'élément d'étanchéité (4) présente un méplat adapté au contour intérieur du composant (2) rotatif.

9. Procédé de fabrication d'un dispositif d'étanchéité (1) selon l'une quelconque des revendications 1 à 8, **caractérisé en ce que** le composant (2) rotatif est un rotor pour une pompe à huile, en particulier un rotor intérieur (2).

10. Procédé de fabrication d'un dispositif d'étanchéité (1) selon l'une quelconque des revendications 1 à 9, **caractérisé en ce que** le rotor intérieur (2) présente sur son contour intérieur au moins un entraîneur (3.1, 3.2) pour l'entraînement par l'arbre.
